# EUROPÄISCHE PATENTSCHRIFT

(11) **EP 2 492 118 B1**
(45) Veröffentlichungstag und Bekanntmachung des Hinweises auf die Patenterteilung: **13.12.2017**
(21) Anmeldenummer: 12000956.8
(22) Anmeldetag: 15.02.2012
(51) Int. Cl.: B60G 17/04, B60T 17/00, F15B 21/04

(54) **Verfahren zum Betreiben einer Druckluftaufbereitungsanlage in einem Fahrzeug, Druckluftaufbereitungsanlage mit einem solchen Verfahren, Fahrzeug mit einer solchen Druckluftaufbereitungsanlage und Computerprogrammprodukt**
Method for operating a compressed air conditioning unit in a vehicle, compressed air conditioning unit with such a method, vehicle with such a compressed air conditioning unit and computer program product
Procédé de fonctionnement d'une installation de traitement de l'air comprimé dans un véhicule, installation de traitement de l'air comprimé dotée d'un tel procédé, véhicule doté d'une telle installation de traitement de l'air comprimé et produit de programme informatique

(30) Priorität: 25.02.2011 DE 102011012309; 18.11.2011 EP 11009166
(43) Veröffentlichungstag der Anmeldung: 29.08.2012
(73) Patentinhaber: WABCO GmbH, 30453 Hannover (DE)
(72) Erfinder: Brinkmann, Stefan, 31515 Wunstorf (DE); Pendzich, Kevin, 30161 Hannover (DE); Reinhardt, Joachim, 30455 Hannover (DE); Strilka, Bernd, 30459 Hannover (DE)

(56) Entgegenhaltungen:
- DE-A1- 3 724 149
- DE-A1- 19 515 895
- DE-A1-102006 023 632
- DE-A1-102007 046 462
- DE-A1-102008 024 629
- DE-A1-102008 053 996
- DE-A1-102009 003 396
- DE-C1- 19 710 059

## Beschreibung

Die Erfindung betrifft ein Verfahren zum Betreiben einer Druckluftaufbereitungsanlage in einem Fahrzeug gemäß Anspruch 1, eine Druckluftaufbereitungsanlage mit einem solchen Verfahren gemäß Anspruch 6, ein Fahrzeug mit einer solchen Druckluftaufbereitungsanlage gemäß Anspruch 7 sowie ein Computerprogrammprodukt gemäß Anspruch 8.

Fahrzeuge, insbesondere Nutzfahrzeuge, werden oftmals mittels Druckluft gebremst. Hierzu ist es erforderlich für die Bremsung des Fahrzeugs und für weitere Fahrzeugfunktionen, wie z. B. eine Liftachssteuerung oder eine Luftfederung, Druckluft im Fahrzeug zur Verfügung zu stellen. Üblicherweise erfolgt eine derartige Bereitstellung mittels bekannter Druckluftaufbereitungsanlagen, welche beispielsweise über einen mit dem Fahrzeugmotor verbundenen Kompressor Druckluft erzeugen und diese Druckluft in Druckluftbehältern speichern kann. Hierzu wird aus der Umgebungsluft (Atmosphäre) Luft angesaugt und im Kompressor verdichtet. Die angesaugte Luft kann hierbei, je nach Witterungslage, unterschiedlich stark mit Feuchtigkeit belastet sein. Weiterhin kann die verdichtete Druckluft durch einen üblicherweise ölgeschmierten Kompressor zusätzlich mit Ölnebel vermischt sein. Daher erfolgt bekanntermaßen neben der reinen Drucklufterzeugung auch eine Trocknung und Reinigung der Druckluft in einem so genannten Lufttrockner. Ein Bestandteil des Lufttrockners ist ein Filtermaterial, üblicherweise in Form eines Granulats, welches üblicherweise in einer austauschbaren Kartusche angeordnet ist. Zusätzlich kann eine solche Kartusche auch weitere Filterungen, beispielsweise zur Grobfilterung von Kohlenstoffteilchen und/oder Ölfilter, z. B. Koaleszenzfilter, zur Filterung von Ölnebel in der Druckluft beinhalten.

Da eine Kartusche eine endliche Menge an Filtermaterial/Granulat enthält, ist es erforderlich, die Kartusche von Zeit zu Zeit zu regenerieren. Hierzu wird üblicherweise in Zeiten in denen während des Betriebs des Fahrzeugs kein erhöhter Druckluftbedarf besteht, die Kartusche bzw. der Lufttrockner rückwärts, d. h. aus den Druckluftbehältern, mit getrockneter Druckluft durchströmt. Durch diesen Rückstrom wird die an bzw. in dem Filtermaterial/Granulat gebundene Feuchtigkeit vom Rückstrom mitgerissen und über z. B. ein Ventil in die Umgebungsluft abgeblasen.

Eine solche Regeneration der Kartusche ist von entscheidender Wichtigkeit da ansonsten die sichere Entfeuchtung der erzeugten Druckluft nicht sichergestellt werden kann, was dazu führen würde, dass einerseits durch den hohen Feuchtigkeitsanteil Teile der nach dem Lufttrockner folgenden Fahrzeugsysteme, z. B. das pneumatische Bremssystem, korrodieren und ausfallen können. Andererseits besteht auch die Gefahr, dass bei geringer Außentemperatur die Feuchtigkeit in der Druckluft kondensieren und gefrieren kann, was ebenfalls im schlimmsten Fall zu einem Ausfall von mit Druckluft betriebenen Fahrzeugsystemen führen kann.

Aus der DE 10 2008 024 629 A1 geht beispielsweise ein Verfahren zur Regeneration des Lufttrockners hervor. Zur Bestimmung der Feuchtigkeit und Temperatur werden hierbei Sensoren eingesetzt. Des Weiteren geht aus der DE 37 24 149 A1 eine Sicherheitseinrichtung gegen das Einfrieren von Luftsystemen hervor. Bei beiden genannten Anmeldungen wurde erkannt, dass ein Einfrieren von zumindest Teilen eines mit Druckluft betriebenen Systems während des Betriebs des Fahrzeugs zu vermeiden ist.

Alle bisher bekannten Druckluftsysteme zielen darauf ab, ein Einfrieren während des Betriebs des Fahrzeugs zu verhindern. Nun gibt es aber auch Fälle in denen das Druckluftsystem vor einem Abstellen des Fahrzeugs nicht mehr ausreichend regeneriert werden kann. Ferner kann es auch aufgrund des Absinkens der Außentemperatur dazu kommen, dass die relative Luftfeuchtigkeit im Druckluftsystem ansteigt, Kondensat ausfällt und gefriert. Dies tritt insbesondere während eines Abstellens des Fahrzeugs über Nacht auf, da insbesondere nachts ein deutliches Absinken der Außentemperatur üblich ist.

Daher ist es Aufgabe der vorliegenden Erfindung ein Verfahren zum Betreiben einer Druckluftaufbereitungsanlage, eine Druckluftaufbereitungsanlage mit einem solchen Verfahren, ein Fahrzeug mit einer solchen Druckluftaufbereitungsanlage sowie ein Computerprogrammprodukt bereitzustellen, welche das Einfrieren eines Druckluftsystems oder Teilen davon sicher unter allen Bedingungen, insbesondere aber während des Nichtbetriebs des Fahrzeugs, verhindert.

Diese Aufgabe wird durch ein Verfahren gemäß Anspruch 1, eine Druckluftaufbereitungsanlage gemäß Anspruch 6, ein Fahrzeug mit einer solchen Druckluftaufbereitungsanlage gemäß Anspruch 7 sowie ein Computerprogramm gemäß 8 gelöst.

Vorteilhafterweise wird die Elektronik in definierten Zeitabständen aktiviert. Diese Zeitabstände können beispielsweise in der Elektronik konfigurierbar sein, wodurch eine hohe Flexibilität hinsichtlich der Nutzung erreicht wird. Des Weiteren ist es von Vorteil, wenn die Elektronik in Abhängigkeit einer Uhrzeitinformation und/oder einer Datumsinformation und/oder einer Information aus einem Navigationssystem und/oder in Abhängigkeit der Länge einer Standzeit des Fahrzeugs und/oder in Abhängigkeit einer vorherigen Protokollierung des Verlaufs der Umgebungstemperatur aktiviert wird. Hierdurch ist eine genaue Anpassung dieser Funktion auf unterschiedliche Einsatzzwecke und Orte, beispielsweise Orte mit hohen Temperaturgefällen zwischen Tages- und Nachttemperaturen, möglich.

In einer bevorzugten Ausführungsform wird die Elektronik endgültig abgeschaltet, wenn der, zumindest eine Druckluftspeicher, drucklos wird oder durch die Druckabsenkung der Druck in dem zumindest einen Druckluftspeicher unter einem definierten Mindestdruck liegt, oder wenn ein positiver Temperaturgradient vorliegt.

Bevorzugt wird eine Information an den Fahrer ausgegeben, wenn eine Druckabsenkung durchgeführt wurde. Hierdurch bekommt der Fahrer einen Hinweis, dass eine Taupunktabsenkung durchgeführt worden ist und nicht etwa eine Leckage im Druckluftsystem vorhanden ist.

Unter dem Begriff Druckquelle soll erfindungsgemäß jede geeignete Einrichtung zur Bereitstellung von Druckluft verstanden werden. Als Beispiele für geeignete Druckquellen sind nachfolgend ein herkömmlicher Kolbenkompressor, eine Membranpumpe, so genannte ölfreie Kompressoren sowie elektrisch oder mechanisch angetriebene Verdichter genannt.

Unter dem Begriff Fahrzeugstillstand soll erfindungsgemäß ein Zustand verstanden werden, bei dem die Zündung des Fahrzeugs nicht eingeschaltet ist. Der Fahrzeugmotor ist in diesem Zustand aus. Ein Halt des Fahrzeugs, beispielsweise vor einer roten Ampel, wird hierbei ausdrücklich nicht als Fahrzeugstillstand angesehen.

Unter dem Begriff Energiesparmodus wird erfindungsgemäß ein Zustand verstanden, in dem eine Elektronik nicht vollständig abgeschaltet ist, sondern sich regelmäßig, beispielsweise in Abhängigkeit von vorgegebenen Zeitabständen und/oder anderen Parametern, aktiviert, um eine Selbstüberprüfung und ggf. eine Aktivierung anderer Fahrzeugkomponenten durchzuführen. Der Begriff Energiesparmodus beschreibt somit einen Zustand, der auch unter den Begriffen Schlafmodus oder Standby bekannt ist.

Unter dem Begriff Parameter soll erfindungsgemäß beispielsweise eine Uhrzeitinformation, eine Datumsinformation, eine Information über die Länge einer Standzeit des Fahrzeugs oder eine Information aus einem Navigationssystem (GPS-Signal) verstanden werden. Es versteht sich von selbst, dass auch mehrere dieser Parameter in Kombination verwendet werden können.

Erfindungsgemäß kann ein Temperatur- und/oder Feuchtigkeitswert entweder mittels geeigneter Sensoren direkt gemessen werden oder der Feuchtigkeitswert kann aus einem Verhältnis zwischen der geförderten Luftmenge und der Regenerationsluftmenge berechnet werden. Der Temperaturwert kann beispielsweise auch von anderen Systemen im Fahrzeug abgefragt werden. Als Temperaturwert ist beispielsweise die Umgebungstemperatur des Fahrzeugs geeignet, welche über einen Außentemperatursensor erfasst werden kann.

Beispielsweise kann auch ein Temperatur- und/oder Feuchtigkeitswert anderweitig ermittelt werden. Z. B. kann dieser geschätzt werden, indem die Feuchte z.B. von einem Sensor in der Ansaugung der Motorluft gemessen, und von dem Motorsteuergerät auf dem/einem Fahrzeugbus (z.B. CAN) gesendet wird. Dieser Wert wird zusammen mit der von der Elektronik selbst gemessenen Temperatur zur Berechnung des Taupunkts verwendet. Nach dem Abstellen des Fahrzeugs (Stillstand) steht der Wert für die Feuchte nicht mehr zur Verfügung und es kann nur noch aus dem Wertepaar von Feuchte und Temperatur zum Zeitpunkt des Abstellens und der aktuellen Temperatur nach dem Aufwachen auf den (aktuellen) Wert für die Feuchte geschlossen werden.

Weiterhin kann auch ein Temperatur- und/oder Feuchtigkeitswert von "extern" empfangen werden. Die Werte für Feuchte und Temperatur könnten grundsätzlich auch von einer anderen Elektronik im Fahrzeug ermittelt und auf dem/einem Fahrzeugbus (z.B. CAN) gesendet werden. Diese empfangenen Werte werden dann für die Berechnung des Taupunkts verwendet. Für das erfindungsgemäße Verfahren müsste diese Elektronik ebenfalls mit aufgeweckt werden, beispielsweise durch eine Botschaft auf dem/einem Fahrzeugbus, die von der Elektronik für die Luftaufbereitung nach deren Aufwachen (selbst Aufwecken) gesendet wird. Bevor die Luftaufbereitungs-Elektronik selbst wieder in den Energiesparmodus wechselt oder sich vollständig abschaltet, muss sie der anderen Elektronik eine Botschaft senden, die die Art des Zustandswechsels beschreibt, um Letzterer auch einen entsprechenden Zustandswechsel zu ermöglichen.
Diese Variante stellt eine mögliche Ausführungsform dar.

Es wird im Folgenden von einer Druckluftaufbereitungsanlage ausgegangen, welche zumindest eine Druckquelle zur Erzeugung von Druckluft, einen Lufttrockner zur Trocknung der Druckluft, eine Elektronik zur Steuerung der Druckluftaufbereitungsanlage, eventuell weitere Elektroniken zur Steuerung weiterer Geräte des Druckluftsystems, zumindest einen Druckluftspeicher zur Speicherung der Druckluft sowie ein oder mehrere von einer Elektronik oder mehreren Elektroniken steuerbares Ventil umfasst, dessen Betätigung durch einen direkten oder mittelbaren Entlüftungsvorgang den Systemdruck reduziert.

Die mit einer Elektronik ausgestattete Druckluftaufbereitungsanlage überwacht ständig die relative Luftfeuchtigkeit und die Temperatur im Druckluftsystem. Weist die Druckluft bei einem Fahrzeugstillstand eine kritische relative Feuchte auf, wird dieses erkannt und die Elektronik schaltet sich nicht wie sonst üblich vollständig ab. Stattdessen wechselt sie in einen Energiesparmodus, aus dem sie sich in Abhängigkeit von definierten Parametern, beispielsweise Zeitintervallen, selbst wieder "aufweckt" um die Temperatur- und/oder Luftfeuchtigkeitswerte zu ermitteln oder zu berechnen. Beim (temperaturbedingten) Überschreiten eines Feuchte-Grenzwertes wird dann die Luftfeuchtigkeit durch eine gezielte Druckabsenkung im Druckluftsystem reduziert. Dies erfolgt dadurch, dass durch mindestens eine Elektronik mindestens ein Ventil, dessen Betätigung eine Reduzierung des Systemdrucks zur Folge hat, mittels eines Signals betätigt wird.

Für diese Funktion werden keine zusätzlichen mechanischen Teile bzw. Komponenten in der Druckluftaufbereitungsanlage benötigt, da die Druckreduzierung durch das Betätigen des ohnehin vorhandenen Regenerationsventils erfolgen kann und damit in vorteilhafter Weise gleichzeitig eine zusätzliche Regeneration der Trockenmittelkartusche erfolgen kann. Die abgelassene Luft geht somit nicht ungenutzt verloren, da sich die Kartusche beim Beginn der Wiederbefüllung in einem besseren (trockneren) Zustand befindet. Alternativ können auch ebenfalls vorhandene Systemkomponenten, wie ein ABS-Ventil oder das Ventil für die Harnstoffeinspritzung (Abgasreinigung) mit der jeweils zugehörigen Elektronik, für die Realisierung der Funktion genutzt werden.

Die Bestimmung der relativen Luftfeuchtigkeit kann je nach Ausgestaltung der Druckluftaufbereitungsanlage direkt durch Messwerterfassung oder durch Berechnung des Verhältnisses von geförderter Luftmenge zu Regenerationsluftmenge, o. ä. erfolgen.

Der Energiesparmodus wird hierbei immer bei einem Fahrzeugstillstand in Abhängigkeit von Parametern aktiviert. Als geeignete Parameter können hierfür u. a. die Uhrzeit, gegebenenfalls ergänzt durch das Datum, eine minimal vergangene Standzeit und/oder die vorherige Protokollierung des Verlaufs der Umgebungstemperatur genutzt werden.

Eine Absenkung des Druckluftniveaus (Systemdruck) muss nicht erst bei Erreichen eines Feuchte-Maximalwertes erfolgen, sondern kann auch schon bei mittleren Feuchtewerten vorgenommen werden, um eine ständige Reserve bis zur Kondensatbildung aufrechtzuerhalten. Dabei ist es vorteilhaft, eine notwendige bzw. gewollte Absenkung des Drucks gestuft vorzunehmen.

Nachfolgend ein Beispiel für eine gestufte Absenkung des Drucks.

Beim Abstellen des Fahrzeugs weisen das Druckluftsystem und die Umgebung die folgenden Werte auf:
- p(System) = 10,0 bar (relativ) F(System) = 87,5 % rF
- T(Umgebung) = +10 °C T(System) = +10 °C
mit
p: Druck; F: Feuchte; T: Temperatur

Hieraus errechnet sich bekanntermaßen ein Taupunkt von +8,0 °C, also eine Taupunktabsenkung von 2,0 °C. Das bedeutet, wenn die Umgebungstemperatur um 2,0 °C sinkt und die Temperatur in den Behältern, Rohrleitungen und Geräten den gleichen Wert annimmt, kondensiert Feuchtigkeit im System und es kann entsprechend Wasser ausfallen.

Wenn der Druck von 10,0 bar (relativ) auf 8,6 bar (relativ) abgesenkt wird, errechnet sich ein Taupunkt von +6,0 °C, also eine Taupunktabsenkung von 4,0 °C (bezogen auf eine Umgebungstemperatur von +10 °C).
Sinken bei einem Systemdruck von 8,6 bar Umgebungs- und Systemtemperatur auf +8,0 °C, so verringert sich die Taupunktabsenkung wieder auf 2,0 °C.
Die Tabelle zeigt für das gegebene Beispiel den zahlenmäßigen Zusammenhang zwischen dem Systemdruck (1. Spalte), der Taupunktabsenkung bezogen auf eine Umgebungs-/Systemtemperatur von +10,0 °C (2. Spalte) und der Umgebungs-/Systemtemperatur, bei der noch eine Taupunktabsenkung von 2,0 °C erreicht wird (3. Spalte).

| Systemdruck p [bar] | Taupunktabsenkung TP [°C] T(Umgebung) = 10,0 °C | Umgebungstemperatur T [°C] Taupunktabsenkung = 2 °C |
|---|---|---|
| 8,6 | 4 | +8 |
| 7,3 | 6 | +6 |
| 6,2 | 8 | +4 |
| 5,3 | 10 | +2 |
| 3,8 | 12 | 0 |
| 2,1 | 17 | -5 |
| 1,0 | 22 | -10 |
| 0,0 | 30 | -18 |

Für die Taupunktabsenkung in Spalte 2 wurde ab der Tabellenmitte eine größer werdende Schrittweite gewählt, um die Anzahl der benötigten Zeilen bis zu einem Systemdruck von 0 bar zu begrenzen.

Weitere Erläuterungen: Eine Absenkung des Drucks von 10 bar auf 8,6 bar erhöht die Taupunktabsenkung von 2 °C auf 4 °C. Soll eine Mindest-Taupunktabsenkung von 2 °C gewährleistet sein, ist diese Maßnahme bis zu einer Umgebungstemperatur von +8 °C ausreichend. Ein weiteres Entlüften auf 7,3 bar würde wiederum eine Taupunktabsenkung größer/gleich 2 °C bis +6 °C Umgebungstemperatur ergeben. Sollte sich die Temperatur während der Nacht auf +5 °C verringern, wäre die Druckabsenkung auf 6,2 bar erforderlich. Die Funktion kann selbstverständlich auch so parametriert werden, dass aus Gründen der Sicherheit größere Taupunktabsenkungen aufrechterhalten werden. Die maximal mögliche Taupunktabsenkung von 30 °C durch eine Entlüftung auf 0,0 bar würde bis zu einer Umgebungstemperatur von -18 °C die Kondensation verhindern. Das zeigt, dass diese Funktion auch bei einem extremen Temperaturabfall wirksam ist.

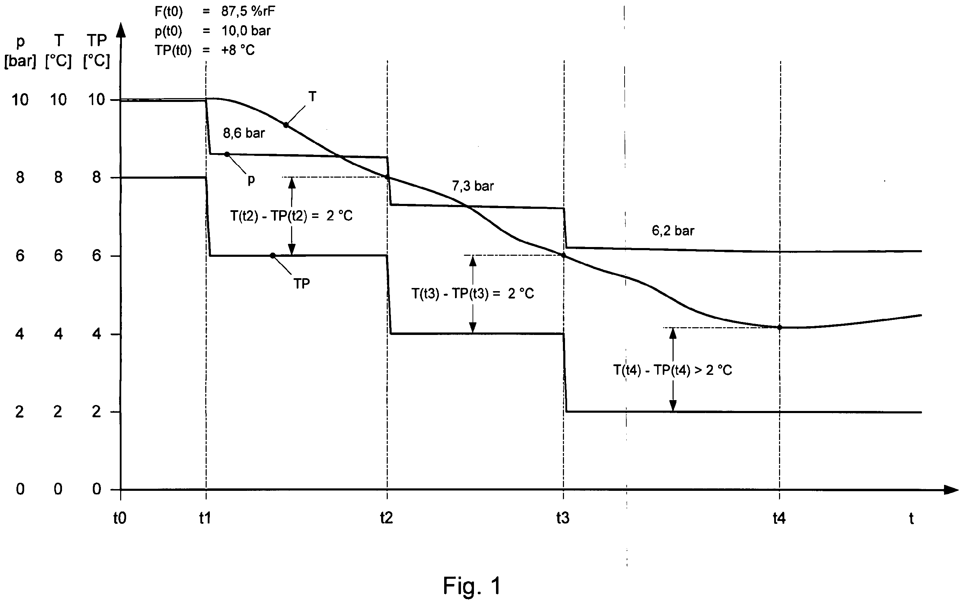

Grafisch ist dieser Verlauf in der Figur 1 dargestellt.

Der Energiesparmodus kann spätestens dann beendet werden, wenn der Systemdruck auf 0 bar abgesenkt wurde, aber auch wenn der Temperaturgradient erkennen lässt, dass die Gefahr der Kondensation und des Einfrierens nicht mehr besteht. In diesem Fall verlässt die Elektronik zur Steuerung der Druckluftaufbereitungsanlage den Energiesparmodus und schaltet sich endgültig ab. Haben noch weitere Fahrzeugelektroniken, wie z. B. eine ABS-Elektronik zur Ansteuerung eines ABS-Ventils, bei der Taupunkt-Überwachung und gegebenenfalls auch -Absenkung mitgewirkt, so erhalten diese von der Elektronik zur Steuerung der Druckluftaufbereitungsanlage eine Information über die bevorstehende Abschaltung, damit sie sich ihrerseits ebenfalls endgültig abschalten können.

Es ist außerdem zweckmäßig, dass eventuell die von der Druckluftaufbereitungsanlage vorgenommenen Druckabsenkungen an das Fahrerinformationssystem (Armaturenbrett) gemeldet werden, damit diese nicht als vermeintliche Leckagen interpretiert werden. Diese Information sollte auch übertragen werden, um dem Fahrer zu signalisieren, dass sich gegebenenfalls Wasser im System befinden kann und die Gefahr des Einfrierens besteht, insbesondere, wenn der Systemdruck auf 0 bar abgesenkt worden ist.

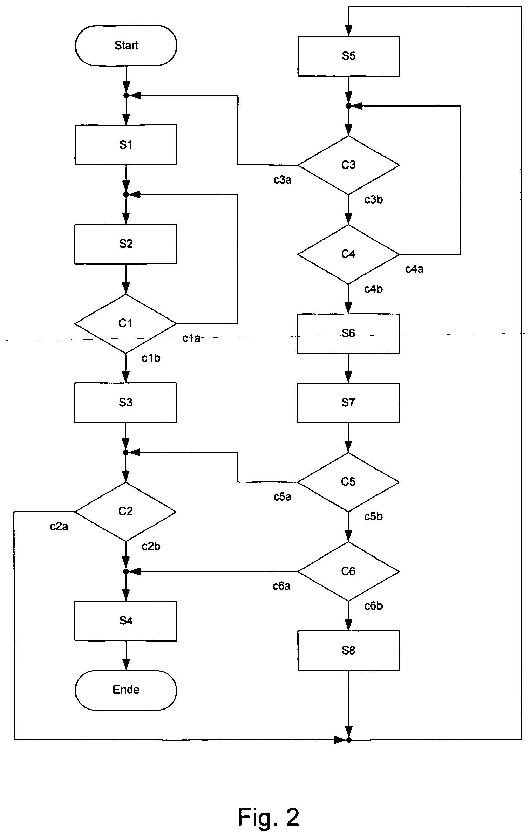

Nachfolgend wird das erfindungsgemäße Verfahren anhand eines Flussdiagramms gemäß Figur 2 beschrieben.

In einem Anfangsschritt "Start" wird das Fahrzeug gestartet, d. h., die Zündung wird eingeschaltet. Hierdurch wird auch in einem ersten Schritt S1 die Elektronik zur Steuerung der Druckluftaufbereitungsanlage eingeschaltet. Während des normalen Betriebs des Fahrzeugs wird dann in einem zweiten Schritt S2 zyklisch die relative Luftfeuchtigkeit und die Temperatur im Druckluftsystem gemessen.

Anschließend wird in einem ersten Entscheidungsschritt C1 überprüft, ob das Fahrzeug abgestellt worden ist, d. h., es wird überprüft, ob die Zündung ausgeschaltet worden ist. Solange sich das Fahrzeug in Betrieb befindet, d. h., die Zündung eingeschaltet ist, wird der erste Pfad c1a durchlaufen, wodurch der zweite Schritt S2 und der erste Entscheidungsschritt C1 regelmäßig durchlaufen werden.

Wird in dem ersten Entscheidungsschritt C1 festgestellt, dass das Fahrzeug außer Betrieb gesetzt wird, d. h., dass die Zündung ausgeschaltet wird, so erfolgt in einem zweiten Pfad c1 b die Abarbeitung der folgenden Schritte:
In einem dritten Schritt S3 erfolgt ein Bewerten der relativen Luftfeuchtigkeit im Druckluftsystem unter Berücksichtigung der Temperatur, des Temperaturgradienten und der Tageszeit.

In einem zweiten Entscheidungsschritt C2 wird geprüft, ob die relative Luftfeuchtigkeit im Druckluftsystem einen kritischen Wert erreicht hat, d. h., die Taupunktabsenkung (= Systemtemperatur - Taupunkt) einen parametrierbaren, minimalen Wert unterschritten hat und/oder der aktuelle und/oder der zu erwartende Temperaturgradient negativ ist und dabei eine parametrierbare Steigung überschreitet.

Bei Vorhandensein einer ausreichenden Taupunktabsenkung und/oder eines positiven Temperaturgradienten und/oder eines negativen Temperaturgradienten mit nur geringer Steigung, wird der dritte Pfad c2b durchlaufen und die Elektronik schaltet sich in einem fünften Schritt S4 ab, da die relative Luftfeuchtigkeit im Druckluftsystem einen unkritischen Wert hat und auch bis zum erneuten Start des Fahrzeugs nicht oder nur geringfügig ansteigen wird, so dass keine Beeinträchtigung durch Kondenswasser-/Eisbildung zu erwarten ist. Hierdurch wird das Verfahren mit dem Abschlussschritt "Ende" beendet.

Alternativ kann auch in einer nicht dargestellten Ausführungs-Variante die Elektronik wieder zurück in den Energiesparmodus (fünfter Schritt S5) wechseln, wobei die Zeitdauer bis zum nächsten "Weckzeitpunkt" in Abhängigkeit der Taupunktabsenkung und/oder des Temperaturgradienten und/oder der Tageszeit verlängert, bzw. auch wieder verkürzt wird. Ein endgültiges Abschalten (Abschlussschritt "Ende") wird in dieser Variante nur erfolgen, wenn der Systemdruck gleich oder kleiner einer parametrierbaren Druckschwelle ist (siehe sechster Entscheidungsschritt C6). Diese alternative Ausführungs-Variante kommt z. B. dann zum Tragen, wenn das Fahrzeug für einen längeren Zeitraum, beispielsweise über ein Wochenende, abgestellt wird. Hierbei kann es passieren, dass z. B. in der ersten Nacht der Temperaturgradient nur eine geringe Steigung aufweist, während in der darauf folgenden zweiten Nacht der Temperaturgradient eine deutlich größere Steigung aufweist, so dass eine Taupunktabsenkung durchgeführt werden muss. In dieser Ausführungs-Variante kann also z. B. ein verlängerter "Weckzeitpunkt", beispielsweise alle 8, 12 oder 24 Stunden durchgeführt werden falls das Fahrzeug in der Zwischenzeit nicht bewegt worden ist.

Hat die Luftfeuchtigkeit im Druckluftsystem dagegen einen kritischen Wert erreicht (dies wird im zweiten Entscheidungsschritt C2 ermittelt) und/oder der Temperaturgradient ist negativ, darf sich die Elektronik nicht abschalten und es erfolgt die Abarbeitung von weiteren Schritten im vierten Pfad c2a. In einem fünften Schritt S5 wird die Elektronik in den Energiesparmodus ("Standby") geschaltet, d. h., die Spannungsversorgung bleibt nur für einen kleinen Bereich innerhalb des Mikrocontrollers der Elektronik eingeschaltet.

In einem auf den fünften Schritt S5 folgenden dritten Entscheidungsschritt C3 wird überprüft, ob das Fahrzeug erneut gestartet wurde (Zündung "EIN"). Dies wird vom Mikrocontroller automatisch durchgeführt. Wenn das Fahrzeug neu gestartet wurde, so wird der Energiesparmodus über den fünften Pfad c3a verlassen und das erfindungsgemäße Verfahren kehrt zum ersten Schritt S1 zurück.

Wenn das Fahrzeug nicht wieder gestartet wurde, so bleibt die Elektronik im Energiesparmodus und es werden weitere Schritte in dem sechsten Pfad c3b durchlaufen, wobei in einem vierten Entscheidungsschritt C4 zunächst überprüft wird, ob die Zeit für das Beenden des Energiesparmodus erreicht wurde. Diese Zeit kann im Microcontroller konfiguriert werden, bzw. ist diese Zeit im Microcontroller hinterlegt.

Ist das Ende der Verweildauer im Energiesparmodus noch nicht erreicht, bleibt die Elektronik in diesem Modus und es wird weiterhin geprüft, ob das Fahrzeug wieder gestartet oder der "Weckzeitpunkt" erreicht wurde (siebter Pfad c4a).

Wenn der "Weckzeitpunkt" erreicht worden ist, muss sich die Elektronik wieder einschalten (siebter Pfad c4b), woraufhin sich die Elektronik in einem sechsten Schritt S6 wieder einschaltet.

Anschließend wird in einem siebten Schritt S7 die relative Luftfeuchtigkeit und die Temperatur im Druckluftsystem gemessen und bewertet.

Hierzu wird in einem fünften Entscheidungsschritt C5 geprüft, ob die Taupunktabsenkung zu gering und somit kritisch für das Druckluftsystem ist. Ist die Differenz zwischen der Temperatur im System und dem Taupunkt kleiner als eine parametrierbare Schwelle, muss der Systemdruck abgesenkt werden.

Bei ausreichend großer Taupunktabsenkung wird der neunte Pfad c5a durchlaufen, d. h., es wird zu dem zweiten Entscheidungsschritt C2 zurückgekehrt, um zu ermitteln, ob es möglich ist die Elektronik vollständig auszuschalten, anstatt sie wieder in den Energiesparmodus wechseln zu lassen.

Wenn die Taupunktabsenkung zu gering ist, so wird der zehnte Pfad c5b durchlaufen und es wird in einem sechsten Entscheidungsschritt C6 überprüft, ob sich der Systemdruck oberhalb einer parametrierbaren Schwelle befindet und noch abgesenkt werden kann.

Ist der Systemdruck kleiner oder gleich der parametrierbaren Schwelle, soll bzw. kann keine weitere Absenkung vorgenommen werden, sodass es sinnvoll ist die Elektronik vollständig auszuschalten, anstatt sie wieder in den Energiesparmodus wechseln zu lassen. Hierzu wird über einen elften Pfad c6a zu dem vierten Schritt S4 zurückkehrt.

Wenn sich der Systemdruck oberhalb der parametrierbaren Schwelle befindet, so wird der zwölfte Pfad c6b durchlaufen, wobei in einem anschließenden achten Schritt S8 der Systemdruck abgesenkt wird.

Es wurde also im sechsten Entscheidungsschritt C6 die Notwendigkeit erkannt den Systemdruck abzusenken, um das Kondensieren und gegebenenfalls Gefrieren von Feuchtigkeit im Druckluftsystem zu verhindern. Hierfür wird beispielsweise der Systemdruck berechnet, der sicherstellt, dass immer der parametrierbare Wert für die minimale Taupunktabsenkung (solange wie möglich) aufrechterhalten wird. Durch das Betätigen (Öffnen) eines Ventils, z. B. des Regenerationsventils oder eines Ventils einer anderen Systemkomponente (z.B. ABS) durch Kommunikation mit der zugehörigen Elektronik über den/einen Fahrzeugbus (z.B. CAN), im achten Schritt S8 wird bei gleichzeitiger Messung der Druckwerte der Systemdruck solange abgesenkt, bis der zuvor berechnete Wert erreicht ist. Das betätigte Ventil wird geschlossen und die Elektronik, bzw die Elektroniken, wenn eine andere Systemkomponente wie zuvor beschrieben mit an dem Verfahren beteiligt ist, wechselt bzw. wechseln wieder in den Energiesparmodus. Nach Durchführung der Absenkung des Systemdrucks wird zum fünften Schritt S5 zurückgekehrt und das Verfahren läuft entsprechend der oben stehenden Beschreibung ab dem fünften Schritt S5 weiter.

## Patentansprüche

1. Verfahren zum Betreiben einer Druckluftaufbereitungsanlage in einem Fahrzeug, wobei die Druckluftaufbereitungsanlage zumindest eine Druckquelle zur Erzeugung von Druckluft, einen Lufttrockner zur Trocknung der Druckluft, eine Elektronik zur Steuerung der Druckluftaufbereitungsanlage, zumindest einen Druckluftspeicher zur Speicherung der Druckluft sowie zumindest ein von der Elektronik zur Steuerung der Druckluftaufbereitungsanlage oder von einer anderen Elektronik steuerbares Ventil umfasst, dessen Betätigung durch einen direkten oder mittelbaren Entlüftungsvorgang den Systemdruck reduziert, **dadurch gekennzeichnet, dass** während eines Fahrzeugstillstandes die Elektronik zur Steuerung der Druckluftaufbereitungsanlage und/oder eine andere Elektronik in einem Energiesparmodus betrieben wird, wobei die Elektronik in Abhängigkeit von Parametern aktiviert wird und wobei in Abhängigkeit von berechneten, gemessenen oder anderweitig ermittelten Temperatur- und/oder Feuchtigkeitswerten eine Druckabsenkung, der in dem zumindest einen Druckluftspeicher gespeicherten Druckluft durch zumindest ein über die Elektronik zur Steuerung der Druckluftaufbereitungsanlage direkt steuerbares Ventil und/oder mittelbar über zumindest ein von einer anderen Elektronik steuerbares Ventil durchgeführt wird.

2. Verfahren nach Anspruch 1, **dadurch gekennzeichnet, dass** die Elektronik in definierten Zeitabständen aktiviert wird.

3. Verfahren nach Anspruch 1, **dadurch gekennzeichnet, dass** die Elektronik in Abhängigkeit einer Uhrzeitinformation und/oder einer Datumsinformation und/oder einer Information aus einem Navigationssystem und/oder in Abhängigkeit der Länge einer Standzeit des Fahrzeugs und/oder in Abhängigkeit einer vorherigen Protokollierung des Verlaufs der Umgebungstemperatur aktiviert wird.

4. Verfahren nach einem der vorherigen Ansprüche, **dadurch gekennzeichnet, dass** die Elektronik endgültig abgeschaltet wird, wenn der zumindest eine Druckluftspeicher drucklos wird oder durch die Druckabsenkung der Druck in dem zumindest einen Druckluftspeicher unter einem definierten Mindestdruck liegt, oder wenn ein positiver Temperaturgradient vorliegt.

5. Verfahren nach einem der vorherigen Ansprüche, **dadurch gekennzeichnet, dass** eine Information an den Fahrer ausgegeben wird, wenn eine Druckabsenkung durchgeführt wurde.

6. Druckluftaufbreitungsanlage mit einer Druckquelle zur Erzeugung von Druckluft, einem Lufttrockner zur Trocknung der Druckluft, einer Elektronik zur Steuerung der Druckluftaufbereitungsanlage, zumindest einem Druckluftspeicher zur Speicherung der Druckluft sowie zumindest einem von einer Elektronik steuerbarem Ventil, **dadurch gekennzeichnet, dass** in einem Datenspeicher der Elektronik ein Verfahren gemäß Anspruch 1 implementiert ist.

7. Fahrzeug, insbesondere Nutzfahrzeug, **dadurch gekennzeichnet, dass** in diesem Fahrzeug eine Druckluftanlage gemäß Anspruch 6 verbaut ist.

8. Computerprogrammprodukt, das direkt in einen Datenspeicher einer Elektronik geladen werden kann und Softwarecodeabschnitte umfasst, mit denen Schritte gemäß Anspruch 1 ausgeführt werden.

9. Verfahren nach Anspruch 1, **dadurch gekennzeichnet, dass** als das Ventil das Regenerationsventil der Druckluftaufbereitungsanlage verwendet wird.

## Claims

1. Method for operating a compressed air preparation system in a vehicle, wherein the compressed air preparation system comprises at least one pressure source for generating compressed air, an air dryer for drying the compressed air, electronics for controlling the compressed air preparation system, at least one compressed air storage device for storing the compressed air as well as at least one valve which can be controlled by the electronics for controlling the compressed air preparation system or by other electronics and whose activation reduces the system pressure by a direct or indirect venting process, **characterized in that** during the stationary state of the vehicle the electronics for controlling the compressed air preparation system and/or other electronics are/is operated in an energy saving mode, wherein the electronics are activated as a function of parameters, and wherein, as a function of temperature values and/or moisture values which are calculated, measured or determined in some other way, a reduction in pressure of the compressed air which is stored in the at least one compressed air storage device is carried out by at least one valve which can be controlled directly by means of the electronics for controlling the compressed air preparation system and/or indirectly by means of at least one valve which can be controlled by other electronics.

2. Method according to Claim 1, **characterized in that** the electronics are activated at defined time intervals.

3. Method according to Claim 1, **characterized in that** the electronics are activated as a function of time information and/or date information and/or information from a navigation system and/or as a function of the length of a stationary time of the vehicle and/or as a function of previous logging of the profile of the ambient temperature.

4. Method according to one of the preceding claims, **characterized in that** the electronics are ultimately switched off if the at least one compressed air storage device becomes pressureless or the pressure in the at least one compressed air storage device is below a defined minimum pressure as a result of the pressure reduction or if a positive temperature gradient is present.

5. Method according to one of the preceding claims, **characterized in that** information is output to the driver if a pressure reduction has been carried out.

6. Compressed air preparation device having a pressure source for generating compressed air, an air dryer for drying the compressed air, electronics for controlling the compressed air preparation system, at least one compressed air storage device for storing the compressed air and at least one valve which can be controlled by electronics, **characterized in that** a method according to Claim 1 is implemented in a data storage device of the electronics.

7. Vehicle, in particular a utility vehicle, **characterized in that** a compressed air system according to Claim 6 is installed in this vehicle.

8. Computer program product which can be loaded directly into a data memory of electronics and comprises software code sections with which steps according to Claim 1 are executed.

9. Method according to Claim 1, **characterized in that** the regeneration valve of the compressed air preparation system is used as the valve.

## Revendications

1. Procédé de mise en fonctionnement d'une installation de traitement d'air comprimé dans un véhicule, dans lequel l'installation de traitement d'air comprimé comprend au moins une source de pression destinée à générer de l'air sous pression, un dessiccateur d'air destiné à dessécher l'air sous pression, un système électronique destiné à commander l'installation de traitement d'air comprimé, au moins un accumulateur d'air comprimé destiné à accumuler l'air comprimé ainsi qu'au moins une soupape pouvant être commandée par le système électronique destiné à commander l'installation de traitement d'air sous pression ou par un autre système électronique, dont l'actionnement réduit la pression du système au moyen d'un processus direct ou indirect d'évacuation de l'air, **caractérisé en ce que**, pendant un arrêt du véhicule, le système électronique destiné à commander l'installation de traitement d'air sous pression et/ou un autre système électronique est mis en fonctionnement dans un mode d'économie d'énergie, dans lequel le système électronique est activé en fonction de paramètres et dans lequel un abaissement de pression de l'air sous pression accumulé dans l'au moins un accumulateur d'air sous pression est effectué en fonction de valeurs de température et/ou d'humidité calculées, mesurées ou déterminées d'une autre manière, par l'intermédiaire d'au moins une soupape pouvant être commandée directement au moyen du système électronique destiné à commander l'installation de traitement d'air sous pression et/ou indirectement par l'intermédiaire d'au moins une soupape pouvant être commandée par un autre système électronique.

2. Procédé selon la revendication 1, **caractérisé en ce que** le système électronique est activé à des intervalles de temps définis.

3. Procédé selon la revendication 1, **caractérisé en ce que** le système électronique est activé en fonction d'une information d'heure et/ou d'une information de date et/ou d'une information provenant d'un système de navigation et/ou en fonction de la longueur d'un temps d'arrêt du véhicule et/ou en fonction d'un enregistrement antérieur de l'évolution de la température ambiante.

4. Procédé selon l'une quelconque des revendications précédentes, **caractérisé en ce que** le système électronique est définitivement désactivé lorsque l'au moins un accumulateur d'air sous pression présente une pression nulle ou par abaissement de la pression dans l'au moins un accumulateur d'air sous pression en dessous d'une pression minimale définie ou lorsqu'un gradient de température positif est observé.

5. Procédé selon l'une quelconque des revendications précédentes, **caractérisé en ce qu'**une information est délivrée au conducteur lorsqu'un abaissement de pression a été effectué.

6. Système de traitement d'air sous pression comportant une source de pression destinée à générer de l'air sous pression, un dessiccateur d'air destiné à dessécher l'air sous pression, un système électronique destiné à commander l'installation de traitement d'air sous pression, au moins un accumulateur d'air sous pression destiné à accumuler l'air sous pression ainsi qu'au moins une soupape pouvant être commandée par un système électronique, **caractérisé en ce qu'**un procédé selon la revendication 1 est mis en oeuvre dans une mémoire de données du système électronique.

7. Véhicule, notamment véhicule utilitaire, **caractérisé en ce qu'**une installation de traitement d'air sous pression selon la revendication 6 est intégrée audit véhicule.

8. Produit de programme d'ordinateur pouvant être chargé dans une mémoire de données d'un système électronique et comprend des sections de code de programme au moyen desquelles les étapes selon la revendication 1 sont mises en oeuvre.

9. Procédé selon la revendication 1, **caractérisé en ce que** la soupape de régénération de l'installation de traitement d'air sous pression est utilisée en tant que soupape.
